# EUROPEAN PATENT APPLICATION

(11) **EP 4 746 220 A1**
(43) Date of publication of application: **20.05.2026**
(21) Application number: 25216021.3
(22) Date of filing: 14.11.2025
(51) Int. Cl.: H02G 3/32

(54) **CABLE RETENTION CLIPS AND METHODS OF USING THE SAME**

(30) Priority: 14.11.2024 US 202463720427 P
(71) Applicant: Hill-Rom Services, Inc., Batesville, IN 47006-9167 (US)
(72) Inventor: COU, Sébastien Jean Henri, Batesville, 47006-9167 (US); MOREL, Thomas, Batesville, 47006-9167 (US)
(74) Representative: Reddie & Grose LLP

(57) **Abstract**

A cable retention clip includes a base, a first leg extending from the base to a first end and movable between an open position and a closed position, and a second leg extending from the base to a second end. The base, the first leg, and the second leg define a channel for disposing a cable therein. The first end of the first leg is spaced from the second end of the second leg in the open position and defines an opening therebetween into the channel. The first leg engages the second leg in the closed position. A door at least partially extends across the opening when the first leg is disposed in the open position. The door is movable against a bias for inserting the cable through the opening into the channel and inhibiting removal of the cable from the channel through the opening.

## Description

### TECHNICAL FIELD

The present specification generally relates to cable retention clips and, more specifically, cable retention clips capable of holding a plurality of cables.

### BACKGROUND

Many industries utilize cable retention clips for retaining and routing cables. For example, in the healthcare industry, cable retention clips are utilized on hospital beds to retain and route various cables for medical equipment that used for treatment, diagnostics, operation of the bed, etc. The cable retention clips typically include a body and a movable clasp that define a channel for receiving the cable(s). In an open position, the clasp defines an opening into the channel for moving the cable(s) into and out of the channel. In a closed position, the clasp connects with the body and retains the cable(s) therein. While useful, loading a cable into the channel requires a user to release the cable once the cable is in the channel and then moving the clasp to close the opening. During the transition from the releasing the cable to grasping the clasp, the cable can move out of the channel through the opening (e.g., by gravity, internal forces within the cable, slippage, etc.). This condition is exacerbated when inserting a plurality of cables into the channel due to the increased time for loading, contact between the cables, etc.

Accordingly, a need exists for alternative cable retention clips.

### SUMMARY

According to one aspect of the present disclosure, there is provided a cable retention clip which may include a base configured to be mounted to a surface, a first leg extending from the base to a first end and movable between an open position and a closed position, and a second leg extending from the base to a second end. The base, the first leg, and the second leg define a channel for disposing a cable therein. The first end of the first leg is spaced from the second end of the second leg in the open position and defines an opening therebetween into the channel. The first leg engages the second leg in the closed position to close off the opening for retaining the cable in the channel. The cable retention clip may further include a door at least partially extending across the opening when the first leg is disposed in the open position. The door is movable against a bias for inserting the cable through the opening into the channel and inhibiting removal of the cable from the channel through the opening.

According to a further aspect of the present disclosure, there is provided a cable retention clip which may include a base configured to be mounted to a surface and a first leg extending in an arcuate configuration from the base to a first end. The first leg may include a living hinge disposed adjacent the base and a body extending from the living hinge to the first end. The body rotates about the living hinge between an open position and a closed position. The cable retention clip may further include a second leg extending from the base to a second end, with the base, the first leg, and the second leg defining a channel for disposing a cable therein. The first end of the first leg is spaced from the second end of the second leg in the open position and defines an opening therebetween into the channel. The first leg engages the second leg in the closed position to close off the opening for retaining the cable in the channel. The cable retention clip may further include a latch disposed on each of the first leg and the second leg that retains engagement of the first leg with the second leg in the closed position and a door extending from the base adjacent the second leg substantially parallel to at least a portion of the second leg. The door at least partially extends across the opening when the first leg is disposed in the open position. The door is deflectable against an internal bias for inserting the cable through the opening into the channel and inhibiting removal of the cable from the channel through the opening.

According to a yet further aspect of the present disclosure, there is provided a method of using a cable retention clip to retain a cable is disclosed. The cable retention clip may include a base, a first leg extending from the base to a first end, a second leg extending from the base to a second end, and a door. The base, the first leg, and the second leg may define a channel. The method may include disposing the first leg in an open position with the first end of the first leg spaced from the second end of the second leg and defining an opening therebetween into the channel, moving the cable through the opening, and engaging the door that extends at least partially across the opening when the first leg is disposed in the open position. The method may further include moving the door with the cable against a bias, disposing the cable within the channel, and inhibiting removal of the cable from the channel through the opening with the door that extends at least partially across the opening. The method may further include moving the first leg from the open position to a closed position and engaging the first leg with the second leg in the closed position to close off the opening for retaining the cable in the channel.

These and additional features provided by the examples described herein will be more fully understood in view of the following detailed description, in conjunction with the drawings.

### BRIEF DESCRIPTION OF THE DRAWINGS

The examples set forth in the drawings are illustrative and exemplary in nature and not intended to limit the subject matter defined by the claims. The following detailed description of the illustrative examples can be understood when read in conjunction with the following drawings, where like structure is indicated with like reference numerals and in which:
FIG. 1 schematically depicts a perspective view of an illustrative cable retention clip mounted to a surface of a structure and retaining cables, according to one or more aspects shown and described herein;
FIG. 2 schematically depicts a perspective view of the cable retention clip disposed in an open position, according to one or more aspects shown and described herein;
FIG. 3 schematically depicts a perspective view of the cable retention clip disposed in a closed position, according to one or more aspects shown and described herein;
FIG. 4 schematically depicts a side elevational view of the cable retention clip disposed in the open position and with a cable disposed in an opening, according to one or more aspects shown and described herein;
FIG. 5 schematically depicts a side elevational view of the cable retention clip disposed in the open position and with the cable disposed in a channel, according to one or more aspects shown and described herein;
FIG. 6 schematically depicts a side elevational view of the cable retention clip disposed in the open position and with a plurality of cables disposed in the channel, according to one or more aspects shown and described herein;
FIG. 7 schematically depicts a side elevational view of the cable retention clip disposed in the closed position and with the plurality of cables disposed in the channel, according to one or more aspects shown and described herein; and
FIG. 8 schematically depicts a flow diagram of a method of using a cable retention clip to retain a cable, according to one or more aspects shown and described herein.

### DETAILED DESCRIPTION

Examples described herein are generally directed to a cable retention clip that includes a base configured to be mounted to a surface, a first leg extending from the base to a first end and movable between an open position and a closed position, and a second leg extending from the base to a second end. The base, the first leg, and the second leg define a channel for disposing one or more cables (including a plurality of cables) therein. The first end of the first leg is spaced from the second end of the second leg in the open position and defines an opening therebetween into the channel. The first leg engages the second leg in the closed position to close off the opening for retaining the cable in the channel. The cable retention clip further includes a door at least partially extending across the opening when the first leg is disposed in the open position. The door is movable against a bias for inserting the cable through the opening into the channel and inhibiting removal of the cable from the channel through the opening.

Previous cable retention clips utilize a body and a movable clasp that define a channel for receiving the cable(s). In an open position, the clasp defines an opening into the channel for moving the cable(s) into and out of the channel. In a closed position, the clasp connects with the body and retains the cable(s) therein. However, loading a cable into the channel requires a user to release the cable once the cable is in the channel and then moving the clasp to close the opening. During the transition from the releasing the cable to grasping the clasp, the cable can move out of the channel through the opening (e.g., by gravity, internal forces within the cable, etc.). This condition is exacerbated when inserting multiple cables into the channel due to the increased time for loading, contact between the cables, etc. The examples described herein overcome these limitations by utilizing the door that at least partially extends across the opening when the first leg is disposed in the open position and is movable against the bias. The user presses the cable against door, which moves the door against the bias and allows the cable to pass by the door into the channel. When the cable is disposed in the channel, the bias causes the door to move back across the opening, inhibiting movement of the cable out of the channel through the opening. Accordingly, the door retains the cable in the channel while the user loads more cables into the channel or moves the first leg to the closed position to fully secure the cable(s) within the channel.

Ranges can be expressed herein as from "about" one particular value, and/or to "about" another particular value. When such a range is expressed, another example includes from the one particular value and/or to the other particular value. Similarly, when values are expressed as approximations, by use of the antecedent "about," it will be understood that the particular value forms another example. It will be further understood that the endpoints of each of the ranges are significant both in relation to the other endpoint, and independently of the other endpoint.

It is noted that the term "substantially" and "generally" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of examples described in the specification.

As used herein, the singular forms "a," "an" and "the" include plural referents unless the context clearly dictates otherwise. Thus, for example, reference to "a" component includes aspects having two or more such components, unless the context clearly indicates otherwise.

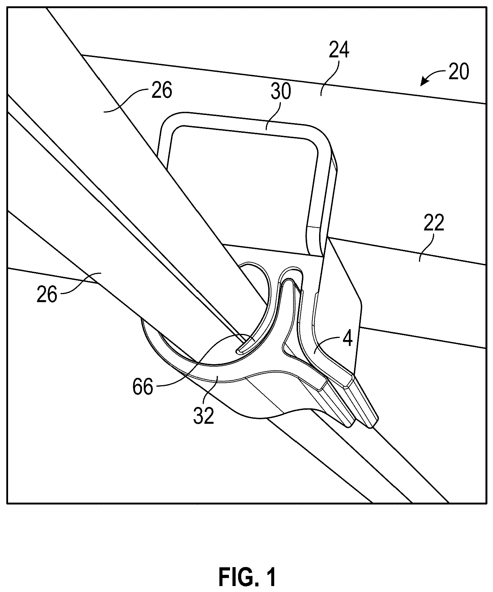

Referring now to the drawings, FIG. 1 schematically depicts a perspective view of a cable retention clip 20 disposed on a surface 22 of a structure 24. In one example, the structure 24 may be a portion of a frame of a hospital bed. However, the cable retention clip 20 may be configured for use with structures, devices, items, systems, etc. in a wide range of industries. The cable retention clip 20 shown in FIG. 1 is a standalone component that is configured to be mounted to the structure 24. However, the cable retention clip 20 may be integrally formed with another component, such as the structure 24. The cable retention clip 20 is configured to retain and route one or more cables 26 depending on the size of the cable(s) 26 in relation to the size of the cable retention clip 20. Thus, the cable retention clip 20 may be sized for use with any number of cables 26. The cable 26 is not limited by this disclosure, and may be any type of cable, including, but not limited to, an electronic cable, a power cable, a push-pull cable, etc. In some examples, the cable 26 may encompass other cable-like structures, such as fiber optic components, conduit, or the like. It is to be appreciated that the cable retention clip 20 may also retain a hose, tube, pipe, or any other elongated object. For simplicity, the description below will refer to one cable 26 being retained by the cable retention clip 20. However, the teachings below may be applied to more than one cable 26 (e.g., a plurality of cables 26).

With reference also to FIG. 1, FIGS. 2 and 3 schematically depict perspective views of the cable retention clip 20. The cable retention clip 20 includes a base 28 configured to be mounted to the surface 22. The base 28 may have a substantially planar configuration. More specifically, as the surface 22 is planar in configuration in the example shown in FIG. 1, the base 28 has the substantially planar configuration that extends along the surface 22. It is to be appreciated that the base 28 may shaped and configured to correspond with the shape and configuration of the surface 22 to which the base 28 will be mounted. The base 28 may be mounted to the surface 22 by mechanical fastening, chemical bonding, or any other suitable manner of fastening.

The cable retention clip 20 may further include a tab 30 extending from the base 28 away from the first leg 32 for engaging the structure 24 and inhibiting rotation of the cable retention clip 20. As shown in FIG. 1, the tab 30 is positioned at a corner of the structure 24 such that the tab 30 extends off the surface 22 and along a side of the structure 24. Movement of the base 28 causes the tab 30 to engage the structure 24, preventing further movement of the base 28. It is to be appreciated that the tab 30 may be configured to extend into a hole, channel, slot, aperture, etc.

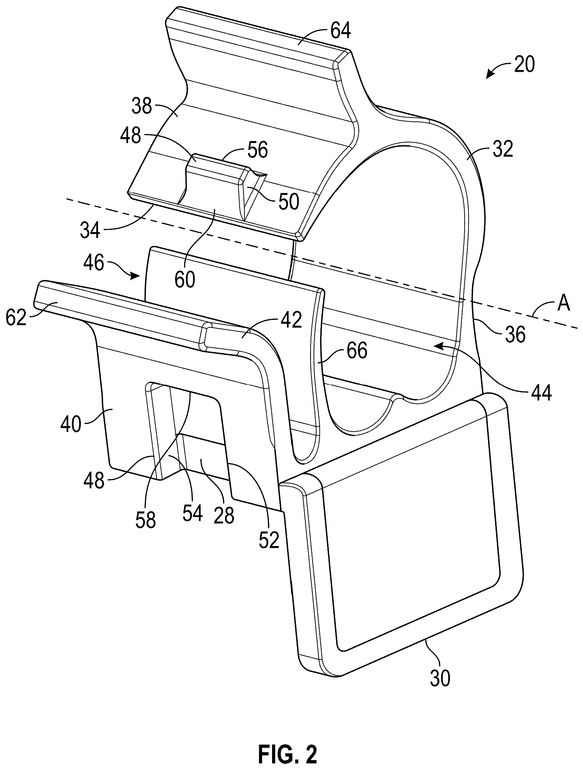

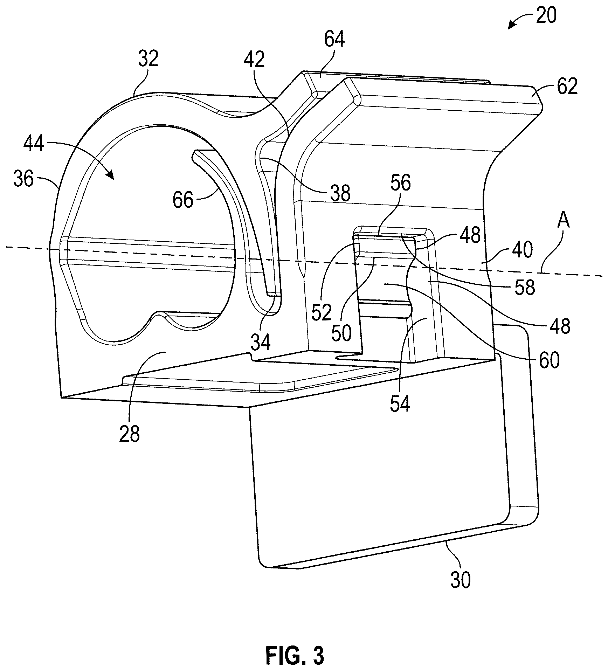

As shown in FIGS. 2 and 3, the cable retention clip 20 includes a first leg 32 extending from the base 28 to a first end 34 and movable between an open position (FIG. 2) and a closed position (FIG. 3). The first leg 32 may extend in an arcuate configuration from the base 28 to the first end 34. However, the first leg 32 may have any suitable shape or configuration.

The first leg 32 may include a living hinge 36 that facilitates movement of the first leg 32 between the open position and the closed position. In the example shown in FIGS. 2 and 3, the living hinge 36 is disposed adjacent the base 28. The living hinge 36 further includes a body 38 extending from the living hinge 36 to the first end 34. The body 38 rotates about the living hinge 36 between the open position (FIG. 2) and the closed position (FIG. 3). More specifically, the living hinge 36 deflects to allow the rotation of the body 38 about the living hinge 36. In the example shown in FIGS. 2 and 3, the living hinge 36 has a thickness that is less than a thickness of the body 38 to promote deflection at the living hinge 36 when a force is exerted on the body 38. However, the living hinge 36 may have holes, channels, or any other reduction in material relative to the body 38 to promote deflection at the living hinge 36. In other examples, the first leg 32 may include a separate hinge that is coupled to the body 38 and the base 28. For example, the hinge may be configured as a corner hinge, door hinge, piano hinge, etc. having two components that are rotatably coupled to one another and independent fixed to the body 38 and the base 28. It is to be appreciated that the first leg 32 may be configured in any suitable configuration for movement between the open position and the closed position.

The cable retention clip 20 includes a second leg 40 extending from the base 28 to a second end 42. The base 28, the first leg 32, and the second leg 40 define a channel 44 for disposing the cable 26 therein. More specifically, the base 28, the first leg 32, and the second leg 40 extend radially about and orthogonal to an axis A. The channel 44 is open along the axis A on opposing sides of the cable retention clip 20. As such, the cable 26 may extend substantially along the axis A through the channel 44 or may extend substantially along at least a portion of the axis A through the channel 44. The base 28, the first leg 32, and the second leg 40 may be shaped to surround the cables 26 within the channel 44. More specifically, the first leg 32 may extend in the arcuate configuration from the base 28 to the first end 34, as described above. The arcuate configuration of the first leg 32 provides the cable retention clip 20 with a semi-circular portion that surrounds the cable 26, which may have substantially cylindrical configuration. Furthermore, the base 28 may be shaped along the channel 44 to provide an arcuate configuration as well, further matching the shape of the cable 26.

The first end 34 of the first leg 32 is spaced from the second end 42 of the second leg 40 in the open position and may define an opening 46 therebetween into the channel 44, as shown in FIG. 2. Accordingly, the opening 46 is positioned transverse to the axis A. The first leg 32 engages the second leg 40 in the closed position to close off the opening 46 for retaining the cable 26 in the channel 44, as shown in FIG. 3. The first leg 32 and the second leg 40 closing off the opening 46 in the closed position prevents movement of the cable 26 (FIG. 1) out of the channel 44 in any radial direction orthogonal to the axis A. In addition, the first leg 32 in the closed position prevents shifting of the cable 26 orthogonal to the axis A and thus guides the positioning of the cable 26.

As shown in FIGS. 2 and 3, the cable retention clip 20 may further include a latch 48 disposed on each of the first leg 32 and the second leg 40 that retains engagement of the first leg 32 with the second leg 40 in the closed position. Said differently, the latch 48 prevents inadvertent movement of the first leg 32 from the closed position (FIG. 3) to the open position (FIG. 2) and thus prevents inadvertent movement of the cable 26 out of the channel 44 and the cable retention clip 20.

In the example shown in FIGS. 2 and 3, the latch 48 includes a protrusion 50 disposed on the first leg 32 and a receptacle 52 disposed on the second leg 40 that is configured to engage and retain the protrusion 50. More specifically, the receptacle 52 defines a cavity 54 configured to receive the protrusion 50 therein. The protrusion 50 includes a first engagement surface 56 disposed substantially orthogonal to the first leg 32 and the receptacle 52 includes a second engagement surface 58 disposed substantially orthogonal to the second leg 40. The first engagement surface 56 is configured to engage along the second engagement surface 58 in the closed position (FIG. 3). More specifically, both the first engagement surface 56 and the second engagement surface 58 are disposed generally orthogonal to the direction of movement of the protrusion 50 within the cavity 54 of the receptacle 52. As such, the first engagement surface 56 and the second engagement surface 58 abut and prevent movement of the first leg 32 from the closed position to the open position.

The protrusion 50 includes a transition surface 60 that extends outwardly from the first leg 32 to the first engagement surface 56 to facilitate movement of the protrusion 50 into the receptacle 52 as the first leg 32 moves from the open position (FIG. 2) to the closed position (FIG. 3). More specifically, the transition surface 60 slides along the second leg 40 on progression toward the receptacle 52 as the first leg 32 moves from the open position (FIG. 2) to the closed position (FIG. 3). The extension of the transition surface 60 outwardly from the first leg 32 causes the first leg 32 to elastically deflect on progression toward the receptacle 52 until the protrusion 50 reaches the cavity 54 and moves through elastic bias into the cavity 54, as shown in FIG. 3. To remove the protrusion 50 from within the cavity 54, the first leg 32 and the second leg 40 is moved laterally away from one another (e.g., by prying). It is to be appreciated that the latch 48 may have any suitable configuration for retaining engagement of the first leg 32 with the second leg 40 in the closed position.

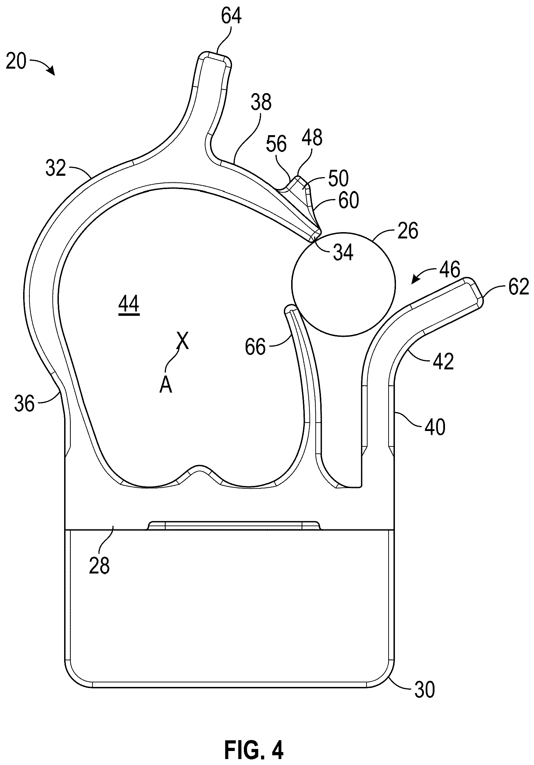

The cable retention clip 20 may further include a ramp 62 extending from the second leg 40 adjacent the second end 42 and away from the channel 44, with the ramp 62 angled toward the opening 46 for sliding the cable 26 there along through the opening 46 into the channel 44, as shown in FIG. 4. More specifically, the ramp 62 may be disposed at the second end 42 and function as a guide for the cable 26 through the opening 46. The user may position the cable 26 on the ramp 62 and slide the cable 26 along the ramp 62, through the opening 46, and into the channel 44.

As shown in FIGS. 2 and 3, the cable retention clip 20 may further include a finger 64 extending from the first leg 32 away from the channel 44, with both the finger 64 and the ramp 62 configured to be grasped and squeezed together to move the first leg 32 from the open position to the closed position. More specifically, the finger 64 and the ramp 62 may typically be squeezed together (e.g., by a hand of a user, a tool, etc.), thus moving the first leg 32 from the open position (FIG. 2) to the closed position (FIG. 3). It is to be appreciated that the first leg 32 may be moved in any suitable manner.

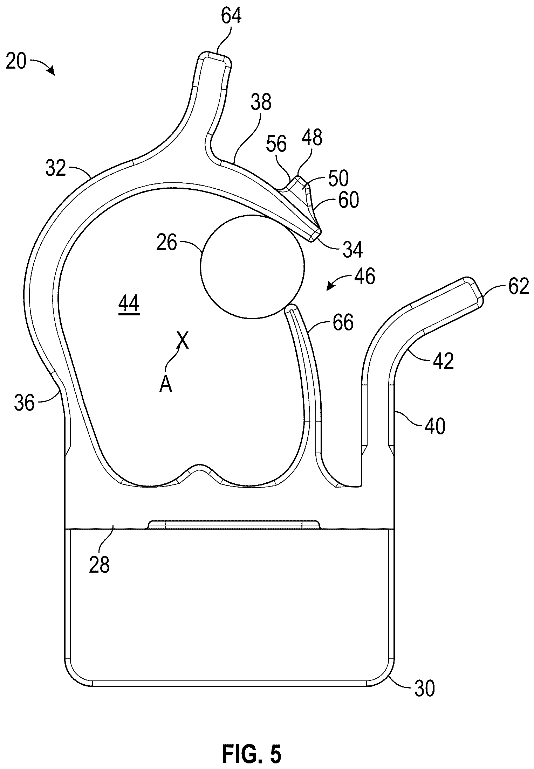

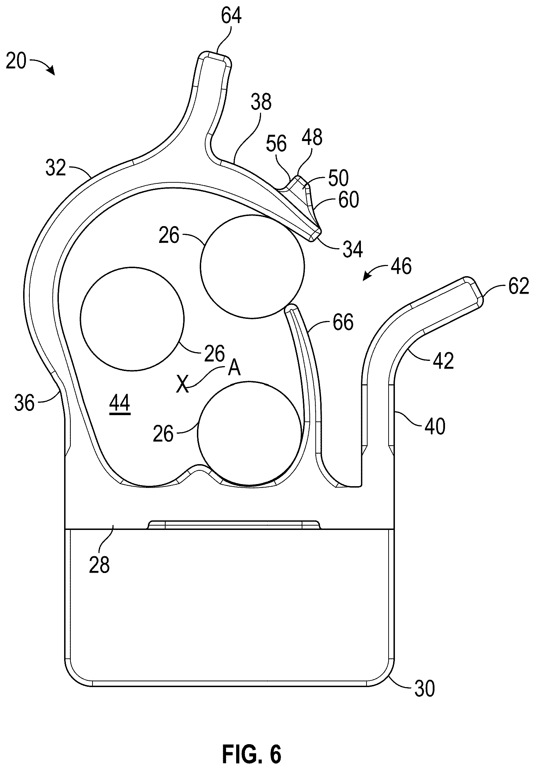

The cable retention clip 20 includes a door 66 at least partially extending across the opening 46 when the first leg 32 is disposed in the open position. The door 66 is movable against a bias for inserting the cable 26 through the opening 46 into the channel 44 (as illustrated between FIGS. 4 and 5 and inhibiting removal of the cable 26 from the channel 44 through the opening 46. As such, the door 66 is configured to be engaged by the cable 26, moved out of the way by the cable 26 against the bias allowing the cable 26 to slip by into the channel 44, and with the bias moving the door 66 back to extending across the opening 46 after the cable 26 is in the channel 44. The door 66 prevents inadvertent removal of the cable 26 until the first leg 32 is moved to the closed position and closes off the opening 46. The door 66 may also be advantageous to allow the insertion of a plurality of cables 26 (as described above) into the channel 44 as shown in FIG. 6, in which the leg is in the open position for a longer period of time and with contact and subsequent movement occurring as more of the cables 26 are inserted into the channel 44.

In the example shown in FIGS. 2 and 3, the door 66 extends from the base 28 and is disposed between the first leg 32 and the second leg 40. More specifically, the door 66 is positioned adjacent the second leg 40 and extends substantially parallel to at least a portion of the second leg 40. As such, the door 66 is positioned to extend along the opening 46. However, the door 66 may be positioned within the channel 44 or outside of the channel 44 and may correspondingly be configured to extend across the opening 46. Furthermore, the door 66 may extend from, or otherwise be coupled to, any portion of the cable retention clip 20 (e.g., the first leg 32 or the second leg 40).

The door 66 extends along at least 50% of the opening 46 when the second leg 40 is in the open position. Said differently, the door 66 extends at 50% of the linear distance across the opening between the first end 34 of the first leg 32 and the second end 42 of the second leg 40. In the example shown in FIGS. 3-6, the door 66 extends along approximately 60% of the opening 46 when the second leg 40 is in the open position. However, the door 66 may extend along any suitable portion of the opening 46.

In the example shown in FIGS. 2 and 3, the door 66 is internally biased against movement. Moreover, the door 66 is deflectable against the internal bias. Said differently, the door 66 is configured to elastically deform against the force exerted by the cable 26 during insertion. As the door 66 is configured for elastic deformation, the door 66 returns to covering the opening 46 once the force of the cable 26 is removed.

The door 66 may be formed of any material capable of elastic deformation. In one example, the door 66 is formed from nylon. However, the door 66 may be formed of any elastomer. In other examples, the door 66 may be formed of a metal, a composite, or any other suitable material. Moreover, in the example shown in FIGS. 2 and 3, the cable retention clip 20 is entirely (e.g., monolithically) formed of a single material, such as nylon. It is to be appreciated that the cable retention clip 20 may be formed from more than one material.

The operation of assembling the cable 26 with the cable retention clip 20 will now be described in detail and with reference to FIGS. 1-7.

With the first leg 32 in the open position, the user positions the cable 26 on the ramp 62 and slides the cable 26 along the ramp 62 to the opening 46 as shown in FIG. 4. The cable 26 engages the door 66. The user exerts force on the door 66 through the cable 26, causing the door 66 to deflect out of the way of the cable 26 against the internal bias of the door 66, allowing the cable 26 to slip by the door 66 into the channel 44, as shown in FIG. 5. When disposed in the channel 44, the internal bias of the door 66 cause the door 66 to deflect back toward to the opening 46, causing the door 66 to extend across the opening 46. With the door 66 extending across the opening 46, the door 66 prevents inadvertent removal of the cable 26 through the opening 46 until the first leg 32 is moved to the closed position and closes off the opening 46.

Any number of additional cables 26 may be inserted into the channel 44 in the manner described above. FIG. 6 schematically depicts an example in which three cables 26 have been inserted into the channel 44 in accordance with operation described above.

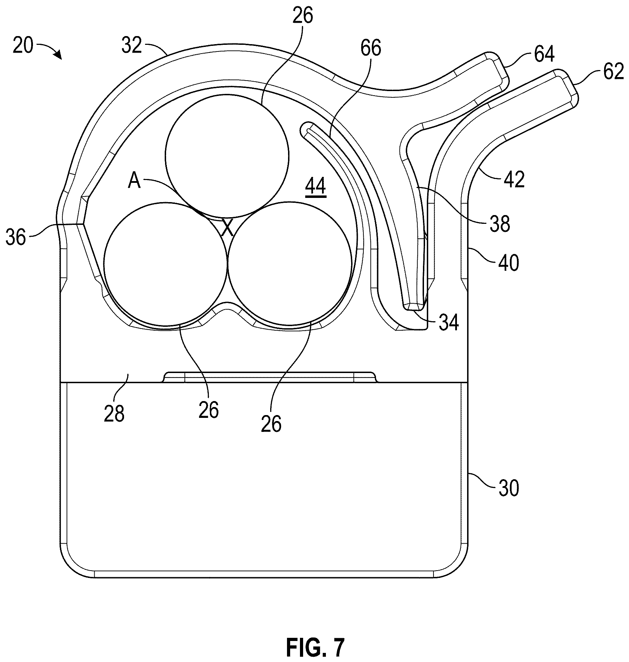

To close the opening 46, the finger 64 and the ramp 62 are grasped and squeezed together, causing the first leg 32 to move from the open position to the closed position, as shown in FIG. 7. The transition surface 60 slides along the second leg 40 on progression toward the receptacle 52 as the first leg 32 moves from the open position to the closed position. The extension of the transition surface 60 outwardly from the first leg 32 causes the first leg 32 to elastically deflect on progression toward the receptacle 52 until the protrusion 50 reaches the cavity 54 and moves through elastic bias into the cavity 54.

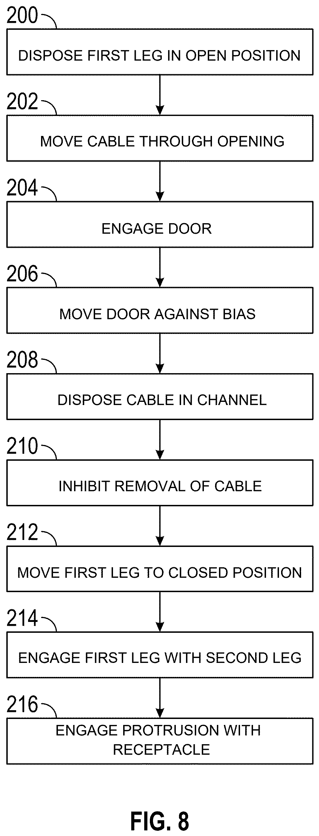

A method of using the cable retention clip 20 to retain the cable 26 will now be described with reference to the description of the cable retention clip 20 shown in FIGS. 1-7, the flow diagram shown in FIG. 8, and the operation of the cable retention clip 20 described above. The method includes disposing the first leg 32 in the open position (FIG. 2) with the first end 34 of the first leg 32 spaced from the second end 42 of the second leg 40 and defining the opening 46 therebetween into the channel 44, as represented by box 200 of FIG. 8. The method further includes moving the cable 26 through the opening 46 (as represented by box 202 of FIG. 8) and engaging the door 66 that extends at least partially across the opening 46 when the first leg 32 is disposed in the open position, as shown in FIG. 4 and represented by box 204 of FIG. 8.

The method further includes moving the door 66 with the cable 26 against the bias (represented by box 206 of FIG. 8), disposing the cable 26 within the channel 44 (as shown in FIG. 5 and represented by box 208 of FIG. 8), and inhibiting removal of the cable 26 from the channel 44 through the opening 46 with the door 66 that extends at least partially across the opening 46 as represented by box 210 of FIG. 8. The method further includes moving the first leg 32 from the open position to the closed position (represented by box 212 of FIG. 8) and engaging the first leg 32 with the second leg 40 in the closed position to close off the opening 46 for retaining the cable 26 in the channel 44, as shown in FIGS. 3 and 7 and represented by box 214 of FIG. 8. The method may further include engaging the protrusion 50 disposed on the first leg 32 with the receptacle 52 disposed on the second leg 40 when the first leg 32 is in the closed position (represented by box 216 of FIG. 8).

As described above, the door 66 may be configured to deflect against the internal bias. Accordingly, moving the door 66 with the cable 26 against the bias (box 206 of FIG. 8) includes deflecting the door 66 with the cable 26 against the internal bias.

As described above, the first leg 32 may include the living hinge 36 and the body 38 extending from the living hinge 36 to the first end 34. As such, moving the first leg 32 from the open position to the closed position (box 212 of FIG. 8) includes rotating the body 38 about the living hinge 36 between the open position (FIG. 2) and the closed position (FIG. 3).

From the above, it is to be appreciated that defined herein is a cable retention clip that includes a base configured to be mounted to a surface, a first leg extending from the base to a first end and movable between an open position and a closed position, and a second leg extending from the base to a second end. The base, the first leg, and the second leg define a channel for disposing a cable therein. The first end of the first leg is spaced from the second end of the second leg in the open position and defines an opening therebetween into the channel. The first leg engages the second leg in the closed position to close off the opening for retaining the cable in the channel. The cable retention clip further includes a door at least partially extending across the opening when the first leg is disposed in the open position. The door is movable against a bias for inserting the cable through the opening into the channel and inhibiting removal of the cable from the channel through the opening.

The examples described herein utilize the door that at least partially extends across the opening when the first leg is disposed in the open position and is movable against the bias. The user presses the cable against door, which moves the door against the bias and allows the cable to pass by the door into the channel. When the cable is disposed in the channel, the bias causes the door to move back across the opening, inhibiting movement of the cable out of the channel through the opening. Accordingly, the door retains the cable in the channel while the user loads more cables into the channel or moves the first leg to the closed position to fully secure the cable(s) within the channel.

Further aspects of the examples described herein are provided by the subject matter of the following clauses:
Clause 1. A cable retention clip comprising: a base configured to be mounted to a surface; a first leg extending from the base to a first end and movable between an open position and a closed position; a second leg extending from the base to a second end, with the base, the first leg, and the second leg defining a channel for disposing a cable therein, with the first end of the first leg spaced from the second end of the second leg in the open position and defining an opening therebetween into the channel, and with the first leg engaging the second leg in the closed position to close off the opening for retaining the cable in the channel; and a door at least partially extending across the opening when the first leg is disposed in the open position, wherein the door is movable against a bias for inserting the cable through the opening into the channel and inhibiting removal of the cable from the channel through the opening.
Clause 2. The cable retention clip of any preceding clause, wherein the door internally biased against movement.
Clause 3. The cable retention clip of any preceding clause, wherein the door is deflectable against the internal bias.
Clause 4. The cable retention clip of any preceding clause, wherein the door extends from the base and is disposed between the first leg and the second leg.
Clause 5. The cable retention clip of any preceding clause, wherein the door is positioned adjacent the second leg and extends substantially parallel to at least a portion of the second leg.
Clause 6. The cable retention clip of any preceding clause, wherein the door extends along at least 50% of the opening when the second leg is in the open position.
Clause 7. The cable retention clip of any preceding clause, wherein the first leg extends in an arcuate configuration from the base to the first end.
Clause 8. The cable retention clip of any preceding clause, wherein the first leg comprises a living hinge that facilitates movement of the first leg between the open position and the closed position.
Clause 9. The cable retention clip of clause 8, wherein the living hinge is disposed adjacent the base and the living hinge further comprises a body extending from the living hinge to the first end, wherein the body rotates about the living hinge between the open position and the closed position.
Clause 10. The cable retention clip of any preceding clause, further comprising a latch disposed on each of the first leg and the second leg that retains engagement of the first leg with the second leg in the closed position.
Clause 11. The cable retention clip of clause 10, wherein the latch includes a protrusion disposed on the first leg and a receptacle disposed on the second leg that is configured to engage and retain the protrusion.
Clause 12. The cable retention clip of clause 13, wherein the protrusion includes a first engagement surface disposed substantially orthogonal to the first leg and the receptacle includes a second engagement surface disposed substantially orthogonal to the second leg, with the first engagement surface configured to engage along the second engagement surface in the closed position.
Clause 13. The cable retention clip of clause 11 or 12, wherein the protrusion includes a transition surface that extends outwardly from the first leg to the first engagement surface to facilitate movement of the protrusion into the receptacle as the first leg moves from the open position to the closed position.
Clause 14. The cable retention clip of any preceding clause, wherein the base has a substantially planar configuration.
Clause 15. The cable retention clip of any preceding clause, further comprising a tab extending from the base away from the first leg and the second leg for engaging a structure and inhibiting rotation of the cable retention clip.
Clause 16. The cable retention clip of any preceding clause, further comprising a ramp extending from the second leg adjacent the second end and away from the channel, with the ramp angled toward the opening for sliding the cable there along through the opening into the channel.
Clause 17. The cable retention clip of any clause 16, further comprising a finger extending from the first leg away from the channel, with both the finger and the ramp configured to be grasped and squeezed together by a user to move the first leg from the open position to the closed position.
Clause 18. A cable retention clip comprising: a base configured to be mounted to a surface; a first leg extending in an arcuate configuration from the base to a first end, the first leg comprising: a living hinge disposed adjacent the base; and a body extending from the living hinge to the first end, wherein the body rotates about the living hinge between an open position and a closed position; a second leg extending from the base to a second end, with the base, the first leg, and the second leg defining a channel for disposing a cable therein, with the first end of the first leg spaced from the second end of the second leg in the open position and defining an opening therebetween into the channel, and with the first leg engaging the second leg in the closed position to close off the opening for retaining the cable in the channel; a latch disposed on each of the first leg and the second leg that retains engagement of the first leg with the second leg in the closed position; and a door extending from the base adjacent the second leg substantially parallel to at least a portion of the second leg, with the door at least partially extending across the opening when the first leg is disposed in the open position, wherein the door is deflectable against an internal bias for inserting the cable through the opening into the channel and inhibiting removal of the cable from the channel through the opening.
Clause 19. A method of using a cable retention clip to retain a cable, the cable retention clip comprising a base, a first leg extending from the base to a first end, a second leg extending from the base to a second end, and a door, wherein the base, the first leg, and the second leg define a channel, the method comprising: disposing the first leg in an open position with the first end of the first leg spaced from the second end of the second leg and defining an opening therebetween into the channel; moving the cable through the opening; engaging the door that extends at least partially across the opening when the first leg is disposed in the open position; moving the door with the cable against a bias; disposing the cable within the channel; inhibiting removal of the cable from the channel through the opening with the door that extends at least partially across the opening; moving the first leg from the open position to a closed position; and engaging the first leg with the second leg in the closed position to close off the opening for retaining the cable in the channel.
Clause 20. The method of clause 19, wherein moving the door with the cable against the bias comprises deflecting the door with the cable against an internal bias.
Clause 21. The method of clause 19 or 20, wherein the first leg comprises a living hinge and a body extending from the living hinge to the first end, and wherein moving the first leg from the open position to the closed position comprises rotating the body about the living hinge between the open position and the closed position.
Clause 22. The method of clause 19, 20 or 21, further comprising engaging a protrusion disposed on the first leg with a receptacle disposed on the second leg when the first leg is in the closed position.

While particular examples have been illustrated and described herein, it should be understood that various other changes and modifications may be made. Moreover, although various aspects of the claimed subject matter have been described herein, such aspects need not be utilized in combination. It is therefore intended that the appended claims cover all such changes and modifications that are within the scope of the claimed subject matter.

## Claims

1. A cable retention clip, comprising:
a base configured to be mounted to a surface;
a first leg extending from the base to a first end and movable between an open position and a closed position;
a second leg extending from the base to a second end, the base, the first leg, and the second leg defining a channel for disposing a cable therein, the first end of the first leg spaced from the second end of the second leg in the open position and defining an opening therebetween into the channel, and the first leg engaging the second leg in the closed position to close off the opening for retaining the cable in the channel; and
a door at least partially extending across the opening when the first leg is disposed in the open position, wherein the door is movable against a bias for inserting the cable through the opening into the channel and inhibiting removal of the cable from the channel through the opening.

2. The cable retention clip according to claim 1, wherein the door is internally biased against movement.

3. The cable retention clip according to claim 1 or 2, wherein the door extends from the base and is disposed between the first leg and the second leg.

4. The cable retention clip according to claim 3, wherein the door is positioned adjacent the second leg and extends substantially parallel to at least a portion of the second leg.

5. The cable retention clip according to any of claims 1 to 4, wherein the door extends along at least 50% of the opening when the second leg is in the open position.

6. The cable retention clip according to any of claims 1 to 5, wherein the first leg comprises a living hinge that facilitates movement of the first leg between the open position and the closed position.

7. The cable retention clip according to claim 6, wherein the living hinge is disposed adjacent the base and the living hinge further comprises a body extending from the living hinge to the first end, wherein the body rotates about the living hinge between the open position and the closed position.

8. The cable retention clip according to any of claims 1 to 7, further comprising a latch disposed on each of the first leg and the second leg, the latch retaining engagement of the first leg with the second leg in the closed position.

9. The cable retention clip according to claim 8, wherein the latch includes a protrusion disposed on the first leg and a receptacle disposed on the second leg, the receptacle configured to engage and retain the protrusion.

10. The cable retention clip according to claim 9, wherein the protrusion includes a first engagement surface disposed substantially orthogonal to the first leg and the receptacle includes a second engagement surface disposed substantially orthogonal to the second leg, with the first engagement surface configured to engage along the second engagement surface in the closed position.

11. The cable retention clip according to claim 10, wherein the protrusion includes a transition surface that extends outwardly from the first leg to the first engagement surface to facilitate movement of the protrusion into the receptacle as the first leg moves from the open position to the closed position.

12. The cable retention clip according to any of claims 1 to 11, further comprising a tab extending from the base away from the first leg and the second leg for engaging a structure and inhibiting rotation of the cable retention clip.

13. The cable retention clip according to any of claims 1 to 12, further comprising a ramp extending from the second leg adjacent the second end and away from the channel, with the ramp angled toward the opening for sliding the cable there along through the opening into the channel.

14. The cable retention clip according to claim 13, further comprising a finger extending from the first leg away from the channel, with both the finger and the ramp configured to be grasped and squeezed together to move the first leg from the open position to the closed position.

15. A method of using a cable retention clip to retain a cable, the cable retention clip comprising a base, a first leg extending from the base to a first end, a second leg extending from the base to a second end, and a door, wherein the base, the first leg, and the second leg define a channel, the method comprising:
disposing the first leg in an open position with the first end of the first leg spaced from the second end of the second leg and defining an opening therebetween into the channel;
moving the cable through the opening;
engaging the door that extends at least partially across the opening when the first leg is disposed in the open position;
moving the door with the cable against a bias;
disposing the cable within the channel;
inhibiting removal of the cable from the channel through the opening with the door that extends at least partially across the opening;
moving the first leg from the open position to a closed position; and
engaging the first leg with the second leg in the closed position to close off the opening for retaining the cable in the channel.
